Europäisches Patentamt

**European Patent Office**

Office européen des brevets

(19)

(11) Publication number: **0 061 222**

**A1**

(12) # EUROPEAN PATENT APPLICATION

(21) Application number: **82200296.0**

(22) Date of filing: **08.03.82**

(51) Int. Cl.³: **F 24 J 3/02**

(30) Priority: **24.03.81 NL 8101442**

(43) Date of publication of application:
**29.09.82 Bulletin 82/39**

(84) Designated Contracting States:
**DE FR GB IT NL SE**

(71) Applicant: **N.V. Philips' Gloeilampenfabrieken**
**Groenewoudseweg 1**
**NL-5621 BA Eindhoven(NL)**

(72) Inventor: **De Vaan, Robertus Laurentius Clemens**
**c/o INT. OCTROOIBUREAU B.V. Prof. Holstlaan 6**
**NL-5656 AA Eindhoven(NL)**

(74) Representative: **Melio, Jan Dirk et al,**
**INTERNATIONAAL OCTROOIBUREAU B.V. Prof.**
**Holstlaan 6**
**NL-5656 AA Eindhoven(NL)**

(54) Solar collector.

(57) A solar collector comprising one or more elongate, plate-shaped absorbers (7) which are or each of which is in heat-exchanging contact with a pipe (9) which contains a heat transport medium which discharges the heat incident on the absorber (7) or respective absorber (7), the or each absorber (7) being enveloped by an evacuated, transparent envelope (5) having a circular cross-section, there being arranged on one side of the or each absorber a reflector (15, 17) outside the envelope (5), which consists of two parts which contact the envelope (5) along a common generatrix and each of which has the form of a part of the cylindrical surface of a circular cylinder and has a centre of curvature which is situated substantially on the circumference of the envelope or respective envelope, and in which $0.8\,b \leqslant R \leqslant b$ and $0.7\,b \leqslant d \leqslant 1.2\,b$, wherein:

$R$ = the radius of curvature of the reflector parts (15, 17),

$d$ = the distance between the centre line of the or each envelope (5) and the edge of each of the associated reflector parts (15, 17),

$b$ = the diameter of the or each envelope (5).

FIG.1

EP 0 061 222 A1

"Solar collector".

The invention relates to a solar collector comprising one or more elongate, plate-shaped absorbers, which or each of which is in heat-exchanging contact with a pipe which contains a heat transport medium which discharges the heat which is incident on the absorber or respective absorber, the or each absorber being enveloped by an evacuated, transparent envelope having a circular cross-section, there being arranged on one side of the or each absorber, outside the envelpe, a reflector which consists of two parts which contact the envelope along a common generatrix.

The invention has for its object to provide an improved solar collector which has a small depth, which ensures that all intercepted solar radiation is incident on the absorber plate either directly or _via_ only one reflection, and which enables optimum interception of solar radiation with a comparatively cheap construction.

In order to achieve this object, the solar collector in accordance with the invention is characterized in that each of the reflector parts has the form of part of the cylindrical surface of a circular cylinder and has a centre of curvature which is situated at least substantially on the circumference of the envelope or respective envelope, and in that

$0.8\ b \leqslant R \leqslant b$ and $0.7\ b \leqslant d \leqslant 1.2\ b$, where:

R = the radius of curvature of each of the reflector parts,

d = the distance between the centre line of the or each envelope and the edge of each of the associated reflector parts,

b = the diameter of the or each envelope.

A reflector is thus obtained which is very shallow, and which has a large interception angle for solar radiation, the intercepted solar radiation being incident on the rear of the absorber after only one reflection. An optimum compromise can thus be achieved between cost of construction and yield.

The invention will be described in detail hereinafter with reference to the accompanying drawings which show by way of example a solar collector in accordance with the invention.

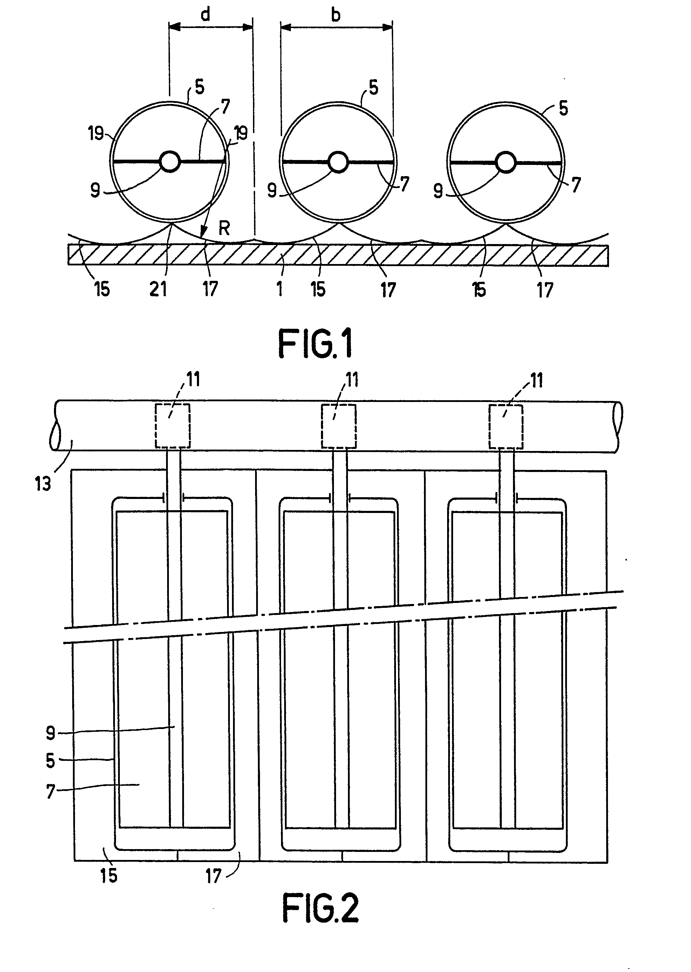

Figures 1 and 2 are a diagrammatic sectional view and plan view, respectively, of a solar collector.

The reference numeral 1 in the drawing denotes a backing on which there is arranged a solar collector which comprises a number of transparent tubes 5 of circular cross-section, each of which accommodates an elongate absorber plate 7 which is provided on both sides with a black absorption layer. The absorber plate 7 is heat-conductively connected to a heat pipe 9 which extends to the exterior of the tube 5, where it can exchange heat, _via_ its condenser 11, with a medium to be heated in a duct 13. In order to prevent heat losses from the absorber plate 7 to the environment, a sub-atmospheric pressure prevails inside the envelopes 5.

Underneath each of the envelopes 5 there is arranged a reflector which consists of two shell parts 15 and 17 each of which has the form of part of the cylindrical surface of a circular cylinder and has a centre of curvature which is situated on or substantially on the envelope 5 at the area 19. The shell parts 15 and 17 contact the envelope along a common generatrix of the envelope at the area 21. The radius of curvature R of the shell parts has a dimension between _b_ and 0.8 b, _b_ being the diameter of the envelope 5. The dimension _d_ of the shell parts 15 and 17 in a direction extending transversely of the centre line of the envelope 5 is between 0.7 b and 1.2 b, _b_ again being the diameter of the envelope 5. When these dimensions are used, a collector is obtained which collects the incident solar radiation on the absorber plate for a very large part either directly or after only one reflection, without being excessively deep and with a reasonable distance between the absorbers.

In a practical embodiment of a suitably operating solar collector, the diameter of the envelope ( $\approx$ the width of the absorber) amounted to 65 mm. The radius of curvature R of the reflector parts amounted to 52 mm and the dimension $\underline{d}$ of the reflector shells in the transverse direction amounted to 52 mm.

**0061222**
1.11.1981

CLAI 3

A solar collector comprising one or more elongate, plate-shaped absorbers, which or each of which is in heat-exchanging contact with a pipe which contains a heat transport medium which discharges the heat incident on the absorber or respective absorber, the or each absorber being enveloped by an evacuated, transparent envelope having a circular cross-section, there being arranged on one side of the or each absorber, outside the envelope, a reflector which consists of two parts which contact the envelope along a common generatrix, characterized in that each of the reflector parts has the form of part of the cylindrical surface of a circular cylinder and has a centre of curvature which is situated at least substantially on the circumference of the envelope or respective envelope, and in that

$0.8\ b \leqslant R \leqslant b$ and $0.7\ b \leqslant d \leqslant 1.2\ b$, where:

$R$ = the radius of curvature of the reflector parts,

$d$ = the distance between the centre line of the or each envelope and the edge of each of the associated reflector parts,

$b$ = the diameter of the or each envelope.

FIG.1

FIG.2

**European Patent Office**

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | US - A - 4 119 085 (GRUMMAN)<br><br>* figure 6; column 4, lines 35-55 *<br><br>-- | 1 | F 24 J 3/02 |
| A | DE - A - 2 524 356 (RASCH) | | |
| A | US - A - 4 184 895 (OWENS) | | |
| A | DE - A - 2.547 351 (ESHELMAN) | | |
| A | DE - A - 2 712 310 (KIRSCHKE) | | |
| A | DE - A - 2 932 683 (FLOEGEL) | | |
| | ------------- | | |

TECHNICAL FIELDS SEARCHED (Int. Cl. ³)

F 24 J

The present search report has been drawn up for all claims

| Place of search | Date of completion of the search | Examiner |
|---|---|---|
| THE HAGUE | June 4, 1982 | SMETS |